**Europäisches Patentamt**

**European Patent Office**

**Office européen des brevets**

(19)

(11) Veröffentlichungsnummer: **0 080 075 B1**

# EUROPÄISCHE PATENTSCHRIFT

(12)

(45) Veröffentlichungstag der Patentschrift:
**28.12.88**

(21) Anmeldenummer: **82110016.1**

(22) Anmeldetag: **29.10.82**

(51) Int. Cl.⁴: **G 01 D 15/06, B 41 J 3/20**

(54) Einrichtung und Verfahren zur Steuerung des Grauwertes.

(30) Priorität: **23.11.81 US 323843**

(43) Veröffentlichungstag der Anmeldung:
**01.06.83 Patentblatt 83/22**

(45) Bekanntmachung des Hinweises auf die Patenterteilung:
**28.12.88 Patentblatt 88/52**

(84) Benannte Vertragsstaaten:
**DE FR GB IT**

(56) Entgegenhaltungen:
**WO-A-81/00466**
**US-A- 3 715 475**
**US-A- 4 033 443**

(73) Patentinhaber: **International Business Machines Corporation, Old Orchard Road, Armonk, N.Y. 10504 (US)**

(72) Erfinder: **Pawletko, Joseph Paul, 3718 Maplehurst Dr., Endwell New York 13760 (US)**
Erfinder: **Pigos, Charles Robert, 1016 Prescott Avenue, Endicott New York 13760 (US)**

(74) Vertreter: **Kirchhof, Norbert, Ing. grad., Schönaicher Strasse 220, D-7030 Böblingen (DE)**

**Beschreibung**

Die Erfindung bezieht sich auf eine Einrichtung zur Steuerung des Grauwertes von durch Treiberschaltungen erregte Elektroden eines Matrixdruckers auf einem ladungsempfindlichen Aufzeichnungsträger zu druckenden Bildelementen während Schreibzyklen, die in eine vorherbestimmte Anzahl zeitlich gleich grosser Teile unterteilt sind und auf ein Verfahren zur Steuerung des Grauwertes von auf einem ladungsempfindlichen Aufzeichnungsträger mittels eines Matrixdruckers zu druckenden Bildelementen, der einen Grundschreibzyklus, mehrere Druckelektroden und Druckelektrodentreiberschaltungen aufweist.

In allen anschlagslosen Druckern, die elektroempfindliche Aufzeichnungsmedien verwenden, kann ein Druckvorgang dadurch ausgelöst werden, dass während einer bestimmten Zeitspanne eine ausreichend hohe Spannung an die Schreibelektroden des Druckers angelegt wird. Diese Fähigkeit, auf einem elektroempfindlichen Aufzeichnungsmedium zu «drucken», ist hauptsächlich eine Funktion der Amplitude und/oder der Dauer des Impulses, der an die Elektroden angelegt wird. Alle bekannten Drucker dieses Typs drucken nur mittels Amplitudenschwankungen, da Schwankungen des relativen Unterschiedes zwischen der Bewegungsgeschwindigkeit des Aufzeichnungsmediums und der Geschwindigkeit, mit welcher ein Druckvorgang ausgeführt wird – einschliesslich des Punktes oder der Punkte innerhalb eines Druckvorgangs, bei welchem ein Bildelement begonnen und abgeschlossen wird – Aufzeichnungsfehler verursachen würden, die, wenn sie nicht ausgeglichen werden, die Druckqualität beeinträchtigen. Ein solcher Ausgleich ist entweder teurer als die Steuerung der Druckimpulsamplitude oder er macht erforderlich, dass während des Druckvorgangs das Aufzeichnungsmedium entweder stark verlangsamt oder ganz angehalten wird.

Abgesehen von diesem Aufzeichnungsproblem und der durch seinen Ausgleich entstehenden Kosten und Ausführungsnachteilen würde das Zeitvariationsverfahren allgemein Anklang finden, da es die Verwendung von vollgesättigten Vorrichtungen erlaubt und ausserdem variable Antriebsspannungen für die Druckelektroden überflüssig macht. Dies hätte wiederum eine erhöhte Betriebsleistung, einen niedrigeren Energieverbrauch sowie weniger Erhitzung und Verlustleistung zur Folge. Versuche zur Ausnützung zeitvariabler Impulse konstanter Amplitude sind bekannt vom Stand der Technik. Eine typische Anordnung dieser Art wird beschrieben in der US Patentschrift 3 441 946. Die Schaltung nach dieser Patentschrift soll Drucksignale einer einzigen Elektrode liefern, die elektroempfindliches Papier verwendet. Im besonderen ist diese Drucksteuerschaltung so ausgelegt, dass die Frequenz des Druckimpulses variiert als eine Funktion der Geschwindigkeit, mit welcher das Aufzeichnungsmedium unter der Elektrode entlanggeführt wird. Auf diese Weise konnte der Erfinder die verschiedenen Aufzeichnungsbedingungen und Geschwindigkeiten ausgleichen sowie das Markierungsausmass des Mediums steuern. Die US Patentschrift 3 553 718 beschreibt einen anderen Drucker mit zeitgesteuerter Kontrolle einer Elektrode. In dieser Patentschrift wird ein Impuls mit konstanter Amplitude nacheinander an eine Reihe von Elektroden angelegt, wobei die Dauer dieses Impulses dem aufzuzeichnenden Signal proportional ist, so dass die Graduierung der Aufzeichnung die Amplitude des Signals darstellt.

Die US Patentschrift 3 613 103 ist ebenso von Interesse wegen seiner Lehre einer elektrolytischen Aufzeichnungsvorrichtung, worin ein aufzuzeichnendes analoges Signal in eine Serie von Impulsen umgewandelt wird mit Impulsanstiegen, die im umgekehrten Verhältnis zu der Amplitude des analogen Signals voneinander beabstandet sind. Die dafür vorgesehene Steuerschaltung ist so ausgelegt, dass sie diese Impulsreihe bildet und sie anschliessend dafür verwendet, einen Impulsgenerator zu schalten, der eine entsprechende Reihe von Druckimpulsen konstanter Amplitude liefert mit einer räumlichen Dichte, die der ursprünglichen Signalamplitude proportional ist. Die US Patentschrift 3 846 801 ist ebenso ein Versuch des Standes der Technik, der eine Zeitdrucksteuerung verwendet. Im besonderen beschreibt diese Patentschrift eine Anordnung zur reihenweisen Aktivierung einer Vielzahl von nebeneinander angeordneten Druckelektroden. Um die Elektroden nacheinander in Betrieb zu nehmen, wird ein Zeitteilungs-Demultiplexor verwendet, um Zeiteinteilungen des Signals an die entsprechenden Elektroden mitzuteilen. Weiterhin ist die Anordnung nach dieser Patentschrift von solcher Art, dass die Elektroden jeweils für nur einen Impuls während einer Taktimpulsperiode geschaltet werden.

Keine der Elektrodenanordnungen des Standes der Technik kann für solche Fälle verwendet werden, in denen Vielfachelektroden benützt werden und wo das Aufzeichnungsmedium im Drucker während des Druckvorganges selbst bewegt wird. Sie würden entweder inakzeptable Aufzeichnungsfehler verursachen oder sie wären den Anforderungen moderner Matrixdrucker nicht gewachsen, die sich ständig bewegende elektroempfindliche Aufzeichnungsmedien benützen. Hier will die Erfindung Abhilfe schaffen. Die Erfindung, wie sie in den Ansprüchen gekennzeichnet ist, löst die Aufgabe eine Vorrichtung und ein Verfahren zur Steuerung des Grauwertes von Bildpunktelementen auf einem bewegten Aufzeichnungsträger zu schaffen, wodurch die Aufzeichnungsfehler auf einen Bruchteil der dieser Aufzeichnungsmethode anhaftenden reduziert werden.

Im folgenden wird die Erfindung anhand eines in den Figuren veranschaulichten Ausführungsbeispieles beschrieben.

Es zeigen:

Fig. 1 den Hauptdruckzyklus eines Matrixdruckers, der sich ständig bewegende elektroempfindliche Aufzeichnungsmedien verwendet, wobei der Druckzyklus in eine gleiche Anzahl von Abteilungen unterteilt wird,

Fig. 2 den Hauptdruckzyklus eines Matrixdruckers, wobei drei Bildelemente als Beispiele darauf vorgesehen sind, um die Art der Fehlaufzeichnung darzulegen, die entsteht, wenn der Versuch gemacht wird, den Grauwert ohne Ausgleich zu steuern,

Fig. 3 eine logische Schaltung zur Bildung der Dichte-Taktimpulssignale zur Ableitung entsprechender Druckimpuls-Wellenformen von Bildelementen, die gemäss der vorliegenden Erfindung zum Eintritt der Druckelektroden dienen,

Fig. 4 vier Taktimpulssignale verschiedener Dichte zur Bildung der Unterteilungen einer Impulswellenform, für welche eine Elektrode aktiviert wird,

Fig. 5 das Verhältnis der Dichte eines gedruckten Punktes zur Impulswellenform, das gemäss der vorliegenden Erfindung zum Erzielen eines Punktes dieser speziellen Dichte verwendet wird, einschliesslich des Taktimpulscodes und der wirksamen Einschaltzeit für jede verfügbare Impulswellenform und Dichtestufe, und

Fig. 6 ein funktionelles Blockdiagramm eines Teils der Schaltung, die gedruckte Bildelemente von möglicherweise unterschiedlicher Dichte liefert, unter Verwendung der Taktimpulssignale von Fig. 4 gemäss der vorliegenden Erfindung, wobei diese Schaltung im angegebenen Ausmass so ausgelegt ist, dass sie Wellenformen unterschiedlicher Dichte für jede der zwei Elektroden bildet.

In einem Matrixdrucker der oben beschriebenen Art, in welchem das Aufzeichnungsmedium sich ständig mit einer bestimmten Geschwindigkeit bewegt, beträgt ein typischer Druckzyklus 500 Mikrosekunden oder 0,5 Millisekunden (ms). Diese Zeitspanne wird gebraucht, um jede einzelne einer Mehrzahl von Elektroden in einem Druckkopf für volle oder Teilbreite zu aktivieren, der quer über dem Aufzeichnungsmedium angebracht ist, und um für den nächsten Druckzyklus bereit zu sein. Eine repräsentative Geschwindigkeit des Aufzeichnungsmediums ist konstant 127 mm pro Sekunde. Wird für die gesamte Druckzeit eine bestimmte Elektrode verwendet, um höchste Druckdunkelheit zu erzielen, dann wird diese Elektrode ein Bildelement gedruckt haben von 0,6 mm Länge bei einer solchen Geschwindigkeit des Aufzeichnungsmediums. Wird eine geringere Dichte des Bildelementes gewünscht, dann kann die entsprechende Elektrode für eine kürzere Zeit betrieben werden. In anderen Worten, die Dichte des gedruckten Bildelementes ist eine Funktion der Zeit, während deren die Druckelektrode mit Antriebsspannung versehen wird. Die Länge des gedruckten Bildelementes ist eine Funktion dieser selben Druckzeit und der Geschwindigkeit, mit welcher das Aufzeichnungsmedium relativ zur Elektrode bewegt wird.

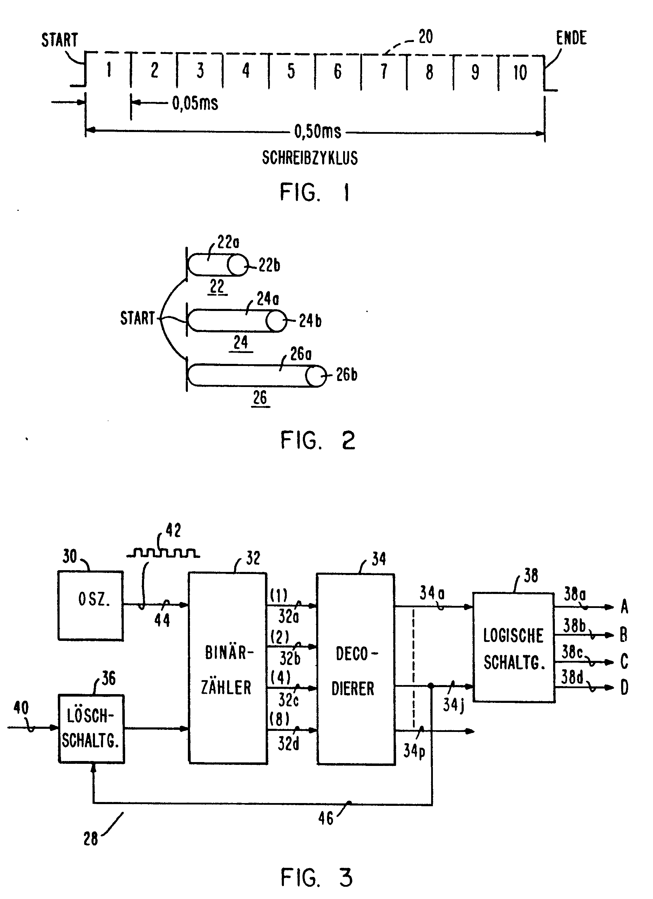

In den Zeichnungen, bei welchen dieselben Bezugszahlen in den verschiedenen Ansichten verwendet wurden zur Identifizierung derselben Elemente, zeigt die Fig. 1 einen Grunddruckzyklus von 0,50 ms, der in 10 Teile gleicher Breite aufgeteilt wurde. Die Anzahl von erforderlichen Druckzyklusteilen ist primär eine Funktion der maximal möglichen feststellbaren Aufzeichnungsfehler und zu einem geringeren Masse der Anzahl von erforderlichen Dichtestufen. In diesem Falle wurde der Druckzyklus in zehn gleiche Teile von 0,05 ms aufgeteilt. Bei einer Geschwindigkeit des Aufzeichnungsmediums von 127 mm pro Sekunde beträgt also die maximale Aufzeichnungsverlagerung oder Unterschiedlichkeit in der Länge der Bildelemente für jeden Druckzyklusteil während der Einschaltzeit 0,06 mm. Allgemein ausgedrückt ist unter normalen Bedingungen und ohne Ausgleich der maximale Aufzeichnungsfehler, der für jede einzelne Unterteilung des Druckzyklus entsteht, eine Funktion der Anzahl von Druckzyklus-Unterteilungen.

Nach einem möglichen System zur Erzielung von Grauwertsteuerung müsste man lediglich eine Druckelektrode beim Beginn jedes Druckzyklus anschalten, und zwar so lange, bis ein Bildelement einer gewünschten Dichte erreicht wird. Wie in Fig. 2 als Beispiel gezeigt, wird auf diese Weise Bildelement 22 gedruckt, indem die entsprechende Elektrode für die ersten drei Unterteilungen eines Druckzyklus 20 angetrieben wird, so dass Bildelement 22 entsteht, welches unter den genannten Bedingungen ein Verlängerungsteil 22a von 0,19 mm aufweist sowie ein Kernteil 22b, dessen Länge eine Funktion des Durchmessers seiner entsprechenden Druckelektrode ist. Ein dunkleres Bildelement 24 mit einem Verlängerungsteil 24a von 0,38 mm Länge und einem Kernteil 24b, dessen Länge eine Funktion des Durchmessers seiner entsprechenden Druckelektrode ist, wird durch Drucken während der ersten sechs Druckzyklus-Unterteilungen erzielt. Ein noch dunkleres Bildelement 26 mit einem Verlängerungsteil 26a von 0,57 mm Länge und einem Kernteil 26b, dessen Länge eine Funktion des Durchmessers seiner entsprechenden Elektrode ist, wird dadurch gedruckt, dass Impulse an diese Elektrode angelegt werden, und zwar während der ersten neun Druckzyklus-Unterteilungen. Es ist klar, dass Fehlaufzeichnungen oder Längenunterschiede bei den Bildelementen 22, 24 und 26 in einem Matrixdrucker der beschriebenen Art sichtbar wären, besonders wenn die Elektroden einen Durchmesser von 1,3 mm aufweisen. Bei diesem oder einem ähnlichen System wären entweder die End- oder die Anfangspunkte eines Bildelementes dieselben, wobei der auffallendste Unterschied in der Länge der Bildelemente da wäre, wo die hellsten und dunkelsten Bildelemente nebeneinander oder nacheinander gedruckt werden. Wo daher alle Bildelemente denselben Anfangs- oder Endpunkt haben, der dem Auge einen gemeinsamen Bezugspunkt gibt, ist eine bestimmte Art von Ausgleich erforderlich, um eine solche sichtbare Fehlaufzeichnung zu vermeiden. Diese Einschränkung kann dadurch überwunden werden, dass die Mehrheit der Antriebswellenformen der Druckelektroden sowie der dadurch gedruckten Bildelemente unterschiedlicher Dichte praktisch an derselben Bezugsstelle oder demselben Bezugspunkt begonnen und abgeschlossen werden.

Zu diesem Zweck wird mittels eines Generators 28 eine vorbestimmte Anzahl von Dichte-Taktimpulsen erzeugt unter Verwendung eines Oszillators 30, eines Binärzählers 32, eines Dekodierers 34, einer Lösch-Schaltung 36 und einer logischen Schaltung 38, wie in Fig. 3 dargestellt. Die Anzahl der Dichte-Taktimpulse ist gleich der Anzahl von Bits kodierter Informationen, die pro Kodewort zur eindeutigen Definierung der Anzahl von verfügbaren Dichtestufen erforderlich sind, d.h. vier im vorliegenden Ausführungsbeispiel. Der Binärzähler 32 und die Kodierer 34 wurden im vorliegenden Fall durch die Verwendung von Chips ausgeführt. Dem Fachmann wird es ausserdem klar sein, dass ein Dekodierungszähler und ein entsprechender Dekodierer daher anstelle der oben erwähnten Teile verwendet werden könnten. Ausserdem ist es offensichtlich, dass die gesamte Vorrichtung zur Bildung von Dichte-Taktimpulsen ebensogut durch die Verwendung gesonderter Schaltungen ausgeführt werden könnte.

Nach einem Startsignal auf ihrer Eingangsleitung 40 stellt die Lösch-Schaltung 36 den Binärzähler zuerst intern auf Null und startet so eine Zählfunktion. Zähler 32 empfängt das Ausgangssignal 42 von Oszillator 30, dessen Einzelimpulse dieselbe Periode aufweisen wie die Unterteilungen des Hauptschreibzyklus 20. Auf diese Weise wären fünf komplette Impulse vom Ausgangssignal 42 des Oszillators längenmässig gleich dem Grundschreibzyklus 20. Die Amplitude der Impulse des Impulszugs 42 wird entsprechend der angewandten logischen Schaltungsfamilie gewählt. Der Ausgang des Binärzählers 32, d.h. die Leitungen 32a bis 32d, werden mit dem Eingang des Dekodierers 34 verbunden. Zählerausgangsleitung 32a hat einen Wert 1 mit einem Impulszug mit einer Hälfte der Frequenz des Zählereingangsimpulses 42. Zählerausgangsleitung 32b hat einen Wert 2 mit einem Impulszug, dessen Frequenz $1/4$ dessen des Zählereingangsimpulses 42 ist. Entsprechend hat Zählerausgangsleitung 32c einen Wert 4 und umfasst einen Impulszug mit einer Frequenz, die $1/8$ der Frequenz des Zählereingangsimpulses 42 beträgt. Zählerausgangsleitung 32d hat einen Wert 8 mit einem Impulszug, dessen Frequenz $1/16$ dessen des Zählereingangsimpulses 42 hat.

Nach Einschalten der entsprechenden Eingangsleitungen dekodiert Dekodierer 34 diese Signale und bildet anschliessend eine Anzahl von Einzelimpulsen auf seinen 16 Ausgangsleitungen 34a bis 43p. Ausgangsleitung 34a z.B. besteht aus einem einzigen Unterteilungsimpuls, der an der Stelle von Unterteilung 1 eines Druckzyklus 20 beginnt und dieselbe Dauer hat. Ausgangsleitung 34b würde aus einem Impulssignal bestehen mit derselben Position und Dauer wie Unterteilung 2 von Grunddruckzyklus 20. Die Ausgangsleitungen 34c bis 34j würden dementsprechend aus einem Impulssignal mit derselben Position und Dauer wie Unterteilungen 3 bis 10 des Druckzyklus 20 bestehen. In diesem Fall, wo nur zehn Druckzyklus-Unterteilungen ausgewählt worden sind, ist kein weiterer Dekodierer-Ausgang erforderlich. Um Zähler 32 wieder zu starten, nachdem die zehn erforderlichen Signale von Dekodierer 34 geliefert wurden, wird eine Lösch-Leitung 46 von Dekodiererausgangsleitung 34j vorgesehen, welche die zehnte und letzte Unterteilung des Druckzyklus 20 liefert, und zwar zu Lösch-Schaltung 36. Das Erscheinen des letzten Unterteilungsimpulses auf Leitung 34j veranlasst die Aktivierung von Lösch-Schaltung 36, wodurch wiederum Zähler 32 gelöscht und die Unterteilungsimpulse wieder gebildet werden. Die verbleibenden 6 Ausgangsleitungen von Dekodierer 34 werden daher nicht benützt.

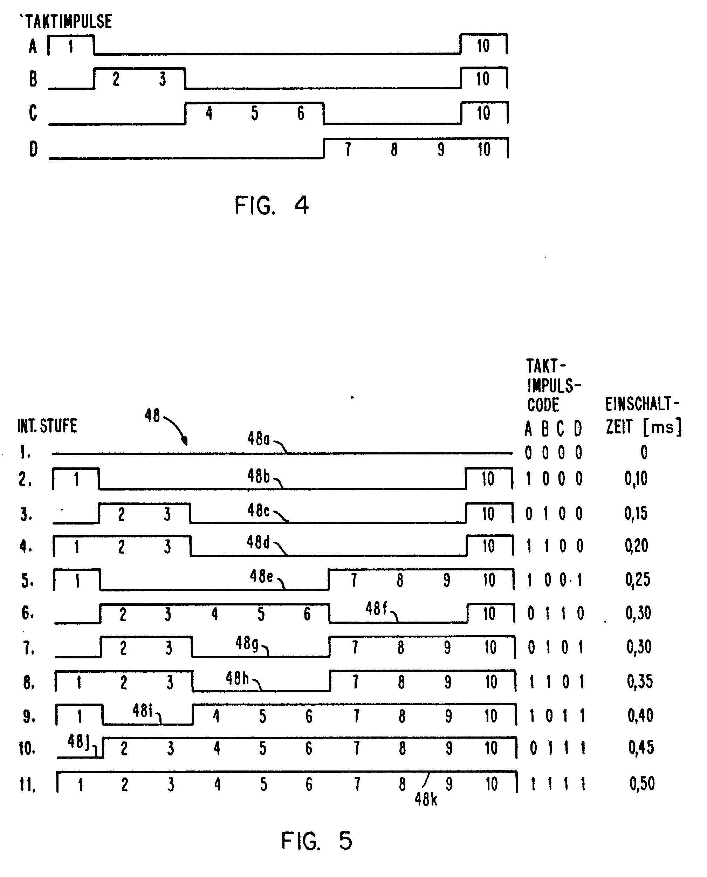

Die von Dekodierer 34 gelieferten Signale gelangen zur logischen Schaltung 38, wo sie je nach Bedarf logisch verknüpft werden, um die Dichte-Taktimpulse A, B, C und D zu bilden, die je nachdem auf den logischen Schaltungen 38a bis 38d erscheinen. Wie in Fig. 4 gezeigt, sind Taktimpulse A bis D Wellenformen derselben Gesamtdauer und Amplitude wie Grunddruckimpuls 20. Der wesentliche Unterschied besteht darin, dass sie alle nur während vorbestimmter und unterschiedlicher Teile ihrer einzelnen Gesamtdauer «angeschaltet» sind. Taktimpuls A beispielsweise besteht aus einer Impulsunterteilung 1 und einer Impulsunterteilung 10 und entsteht auf Ausgangsleitung 38a durch eine ODER-Verknüpfung der Dekodiererausgangsleitungen 34a und 34j in der logischen Schaltung 38. Die positiv werdenden Teile von Taktimpuls A, d.h. Unterteilungen 1 und 10, entsprechen beide in ihrer Breite den Unterteilungen des Druckzyklus. Taktimpuls B, welcher nur Unterteilungsimpulse 2, 3 und 10 umfasst, entsteht durch die ODER-Verknüpfung von Dekodierausgangsleitungen 34b, 34c und 34j in der logischen Schaltung 38. Die positiv werdenden Teile von Taktimpuls B, d.h. Unterteilungen 2, 3 und 10 entsprechen jeweils in der Breite den Unterteilungen des Druckzyklus. Taktimpuls C umfasst lediglich Unterteilungsimpulse 4, 5, 6 und 10 und entsteht durch die ODER-Verknüpfung der Dekodiererausgangsleitungen 34d, 34e, 34f und 34j in der logischen Schaltung 38. Die positiv werdenden Teile von Taktimpuls C, d.h. Unterteilungen 4, 5, 6 und 10, entsprechen jeweils in ihrer Breite den Unterteilungen des Druckzyklus. Taktimpuls D umfasst lediglich Unterteilungsimpulse 7 bis 10 und entsteht durch die ODER-Verknüpfung der Dekodiererausgangsleitung 34g bis 34j in der logischen Schaltung 38. Die positiv werdenden Teile von Taktimpuls D, d.h. Unterteilungen 7 bis 10, entsprechen jeweils in ihrer Breite den Unterteilungen des Druckzyklus.

Die Anzahl der erforderlichen Dichtestufen, welche das Mass der möglichen Grauwerteauflösung bestimmt, wurde im vorliegenden Ausführungsbeispiel willkürlich mit 11 angenommen. Diese Wahl steht in keinem Zusammenhang mit der gewählten Anzahl von Druckzyklus-Unterteilungen, selbst wenn sie dieselbe ist. Die Anzahl von gewählten Unterteilungen ist eine Funktion des kleinsten akzeptablen feststellbaren Fehlers,

während die Anzahl der möglichen Dichtestufen eine Funktion der Kodierung und Hardware ist, die zur eindeutigen Identifikation jeder Dichtestufe erforderlich ist. Vier Ziffern können verwendet werden, um bis zu sechzehn eindeutige Kombinationen oder Dichtestufen in einem Multibit-Wort zu kodieren. Es ist jedoch möglich, eine geringere Zahl von Dichtestufen zu wählen wie im vorliegenden Fall, indem nur elf Dichtestufen vorgesehen sind. Wie schon oben erwähnt, stellt die Anzahl der zur Definition oder Kodierung der erwünschten Dichtestufen gewählten Bits gleichzeitig die Anzahl von Dichte-Taktimpulssignalen ein. Je grösser die Anzahl der Dichtestufen und der hierfür erforderlichen Definitionskodewörter, desto grösser Menge und Kosten der Hardware, die erforderlich ist zur Dekodierung und Bildung der Elektrodenwellenformen, welche die höhere Anzahl von Dichtestufen unterstützen.

Der im vorliegenden Text verwendete Ausdruck «wirksame Einschaltungszeit» bezieht sich auf die Gesamtzeit während jedem der hier beschriebenen akzeptablen Druckimpuls-Wellenformen, indem eine bestimmte Elektrode mit Antriebsspannung versehen wird. Die Dichte-Taktimpulse A, B, C und D werden entweder getrennt oder in einer vorbestimmten Kombination verwendet, um die Schreibimpulsformen 48 für jede der elf Stufen der erwünschten Druckdichte zu entwickeln, mit einer Ausnahme. Die Druckimpulsformen 48a bis 48k sind in Fig. 5 dargestellt. Die Identifikatoren der Dichtestufen sind links von jeder Form 48a bis 48k dargestellt. Die Kodierung der Wellenformen ist rechts davon dargestellt, zusammen mit ihrer wirksamen Einschaltungszeit. Die erste Dichtestufe, die durch die Verwendung der Druckimpulsform 48a entsteht, ist einfach das Fehlen aller Dichteimpulse sowie die eine naheliegende Ausnahme, wo die oben erwähnten Taktimpulssignale nicht verwendet werden. Die zweite Dichtestufe entsteht durch die Verwendung von Druckimpulsform 48b, die lediglich aus dem Signal des Taktimpulses A besteht. Ebenso entsteht die dritte Dichtestufe durch die Verwendung von Druckimpulsform 48c, die lediglich aus dem Signal des Taktimpulses B besteht. Die verbleibenden Dichtestufen-Formen sind das Resultat logischer Verknüpfungen der Dichteimpulse A, B, C und D reflektiert in der Taktkodierung. Die siebte Dichtestufe entsteht z.B. durch die logische Verknüpfung der Dichtesignale A, B und D.

Es ist darauf hinzuweisen, dass nur die Druckimpulsformen 2, 5, 6 und 9 nicht an derselben Stelle oder zur selben Zeit starten wie die verbleibenden Druckimpulsformen. In jedem Fall folgen jedoch diese vier Wellenformen den anderen in einem Abstand von nur einer Druckzyklus-Unterteilung. Auf diese Weise ist der tatsächliche Höchstaufzeichnungsfehler am Beginn jeder dieser vier Druckimpulsformen 0,6 mm, d.h. das Produkt der Geschwindigkeit der Aufzeichnungsmedien (127 mm pro Sekunde) und der Unterteilungszeitspanne (0,05 Mikrosekunden). Weiterhin ist die Höchstzeit zwischen zwei Unterteilungsimpulsen innerhalb einer Druckimpulsform diejenige, die durch Druckimpulsform 1 dargestellt wird, die ausserdem die Form für Taktimpuls A ist. Diese Form umfasst acht aufeinanderfolgende, ausgeschaltete Unterteilungen. Ein hierdurch geformtes Bildelement wird daher Start- und Anfangsteile aufweisen, die um eine Lücke angeordnet sind von 0,5 mm Länge. Da diese Lücke jedoch in der Mitte des Bildelementes auftritt, so erscheint dem Auge des Beobachters, dass das Bildelement komplett und einheitlich ist. Das menschliche Auge hat die Neigung, ein Bildelement mit einem offenen Mittelteil viel rascher zu integrieren als Bildelemente mit gleichen Unterschieden an ihren Start- oder Endpunkten. Infolgedessen wird der erkennbare Aufzeichnungsfehler nicht grösser erscheinen als derjenige, der aus dem Unterglied zwischen den Startpunkten der Druckimpulsformen 48 entsteht oder hiervon verursacht wird, der gemäss der vorliegenden Erfindung nicht mehr als eine einzige Druckzyklus-Unterteilung beträgt.

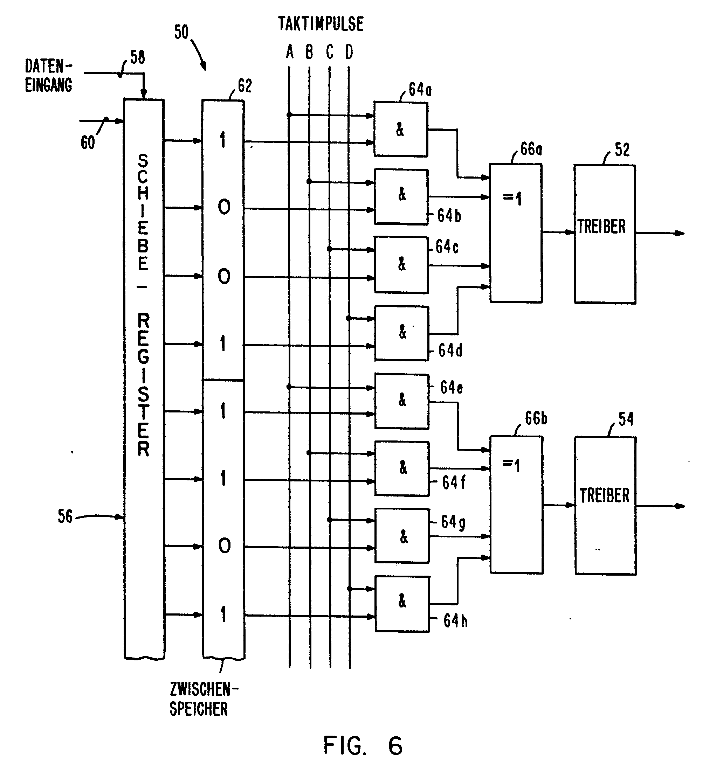

Fig. 6 zeigt einen Teil der Schaltung 50, die die Druckimpulsformen 48a bis 48k bildet. Da der gesamte Schaltkreis 50 genauso funktioniert wie der abgebildete Teil, genügt die folgende Beschreibung dieses Teiles, um die gesamte Anordnung zufriedenstellend zu erklären. In dem gezeigten Teil wird angenommen, dass die Druckimpulsform 48e für die fünfte Dichtestufe durch Treiber 52 für eine erste Druckelektrode geliefert wird, und dass die Druckimpulsform 48h für die achte Dichtestufe vom Treiber 54 für eine zweite Elektrode geliefert wird. Serieninformation, die kodiert wurde zur Darstellung der erwünschten Dichte für jede der Elektroden, wird im Schieberegister 56 eingelesen über dessen Eingangsleitung 58. Mittels Taktimpulsleitung 60 überträgt Register 56 seinen Inhalt parallel an einen Zwischenspeicher 62.

Wie ersichtlich, enthält die erste Stufe des Zwischenspeichers 62 den Taktimpulskode (1001) für die fünfte Dichtestufe und die zweite Stufe des Zwischenspeichers 62 enthält den Taktimpulskode (1101) für die achte Dichtestufe. Die Ausgänge des Zwischenspeichers sind mit einer Mehrzahl von UND-Schaltungen 64 verbunden, wobei nur Schaltungen 64a bis 64h in diesem Fall dargestellt sind. Der andere Eingang von jeder der UND-Schaltungen 64a bi 64h ist zum Empfang eines der Dichteimpulse A, B, C oder D angeschlossen. Ein Satz von vier der UND-Schaltungen 64 ist zum Empfang von jeweils einem dieser Taktimpulse geschaltet und ist selbst mit einer ODER-Schaltung 66 verbunden. Im abgebildeten Teil des Schaltkreises 50 sind speziell die UND-Schaltungen 64a bis 64d zum Empfang von Dichtesignalen A bis D geschaltet, um das logische Resultat des entsprechenden Eingangs an die ODER-Schaltung 66a zu senden, die Druckimpulsform 48e für die fünfte Dichtestufe. UND-Schaltungen 64e bis 64h sind ebenso zur Aufnahme von Dichtesignalen A bis D geschaltet, um an ODER-Schaltung 66b das logische Resultat des entsprechenden Eingangs zu senden, d.h. die Druckimpulsform 48h für die achte Dichtestufe.

Auf diese Weise empfängt UND-Schaltung 64a das Signal des Dichtetaktimpuses A und ein logisches HI-Signal vom Zwischenspeicher 62. UND-Schaltungen 64b und 64c, die an einem ihrer Eingänge mit den Dichteimpulsen B und C beaufschlagt werden, werden jedoch nicht durch das vom Zwischenspeicher 62 kommende logische Signal LO geschaltet. UND-Schaltung 64d erhält das Signal des Dichtetaktimpulses D auf einem ihrer Eingänge und ein logisches HI-Signal auf ihrem anderen Eingang vom Zwischenspeicher 62. Das Endresultat ist, dass die UND-Schaltungen 64a und 64d weiterhin vom Kode des Zwischenspeichers 62 gehalten werden und die verknüpften Signale der Dichtetaktimpulse A und D, die fünfte Dichtestufe oder die Druckimpulsform 48e an die ODER-Schaltung 66a und den Antrieb 52 weitergeben. Auf ähnliche Weise geben die UND-Schaltungen 64e, 64f und 64h nur die Dichtesignale A, B und D weiter an ODER-Schaltung 66b aufgrund des Inhaltes der zweiten Stufe von Zwischenspeicher 62. Wie in Fig. 5 gezeigt, bringt die Kombination der Dichtesignale A, B und C den Druckimpuls 48h, d. h. die achte Dichtestufe, die anschliessend von der ODER-Schaltung 66b an den Druckelektrodentreiber 54 weitergegeben wird. Die dadurch entstehenden zwei Bildelemente sind mit dem blossen menschlichen Auge nicht voneinander zu unterscheiden, obwohl sich ihre Spalte in der Mitte unterscheiden wegen der Unterteilungsdifferenz ihrer Druckimpulsformen und wirksamen Einschaltzeiten. Auf diese Weise werden die mittels der vorliegenden Erfindung erhaltenen Bildelemente allgemein als gleich lang angesehen werden. Nur in vier Fällen wird ein offensichtlicher Aufzeichnungsfehler auftreten, und das wurde auf das absolute Minimum der Unterteilung eines Druckzyklus begrenzt.

Die hier gegebene Beschreibung befasste sich insbesondere mit dem Druckvorgang, in welchem ein sich ständig bewegendes Aufzeichnungsmedium verwendet wird. Dem Fachmann ist klar, dass die vorliegende Erfindung ebenfalls von Nutzen sein kann, wenn sie bei einem Matrixdrucker angewandt wird, dessen Aufzeichnungsmedium während des Druckzyklus angehalten wird.

## Patentansprüche

1. Einrichtung zur Steuerung des Grauwertes von durch Treiberschaltungen erregte Elektroden eines Matrixdruckers auf einem ladungsempfindlichen Aufzeichnungsträger zu druckenden Bildelementen während Schreibzyklen, die in eine vorherbestimmte Anzahl zeitlich gleich grosser Teile unterteilt sind, gekennzeichnet durch

a) Speichermittel (62) zur Aufnahme von kodierten Multibitwörtern, welche den Grauwert der durch die entsprechenden Elektroden zu druckenden Bildelemente darstellen,

b) erste Schaltungsmitel (28) zur Erzeugung einer vorherbestimmten Anzahl von Grauwerttaktsignalen gleicher Amplitude, wobei die Anzahl der Taktsignale gleich ist der Anzahl von Bits der Multibitwörter, wobei jedes Taktsignal einem anderen Bit zugeordnet ist und jedes der Taktsignale eine unterschiedliche Anzahl von Schreibzyklusteilimpulsen enthält, deren positive Teile in ihrer Breite den Teilen der Schreibzyklen entsprechen, und

c) zweite Schaltungsmittel (50), die verbunden sind mit den ersten Schaltungsmitteln (28) zum Empfang der Grauwerttaktsignale, mit den Speichermitteln (62) zum Empfang der kodierten Multibitwörter und mit den Druckelektrodentreiberschaltungen (52, 54) zur Erzeugung eines Schreibimpulses aufgrund von emfpangener kodierter Multibitwörter und Grauwerttaktimpulsen für jede Elektrodentreiberschaltung.

2. Einrichtung nach Anspruch 1, dadurch gekennzeichnet, dass die ersten Schaltungsmittel (28) zur Erzeugung der Grauwerttaktsignale enthalten:

a) eine Oszillatorschaltung (30) zur Erzeugung einer Folge von Impulsen konstanter Amplitude,

b) einen Binärzähler (32), der mit der Oszillatorschaltung (30) verbunden ist zum Empfang der genannten Impulsfolge zur Erzeugung einer Mehrzahl von Impulsen mit konstanter Amplitude aufgrund der empfangenen Oszillatorimpulsfolgen,

c) einen Dekodierer (34), dessen Eingänge mit den Ausgängen des Zählers (32) verbunden sind zur Erzeugung einer Mehrzahl von Ausgangssignalen gleicher Amplitude, die in ihrer Breite und zeitlich den Schreibzyklusteilen entsprechen und

d) eine logische Schaltung (38), deren Eingänge mit den Ausgängen des Decodierers (34) verbunden sind zur Erzeugung der Grauwerttaktsignale durch logische Kombination bestimmter Ausgangssignale des Dekodierers (34).

3. Einrichtung nach Anspruch 1, dadurch gekennzeichnet, dass die Schreibimpulse mit einem Längenunterschied von nicht mehr als einem Schreibzyklusteil erzeugt werden.

4. Einrichtung nach Anspruch 2 und 3, gekennzeichnet durch zusätzliche Rückstellschaltmittel (36), die zwischen der n-ten Ausgangsleitung des Dekodierers (34) und einer Eingangsleitung des Zählers (32) angeordnet sind, um den Zähler zurückzustellen, sobald der Dekodierer (34) sein ntes Ausgangssignal erzeugt, wobei n gleich ist der Anzahl vorherbestimmter Schreibzyklusteile.

5. Einrichtung nach Anspruch 3, bei der die zweiten Schaltungsmittel (64) zur Erzeugung der Schreibimpulse enthalten:

a) Puffer (62), die mit dem Speicher zum Empfang der kodierten Multibitwörter verbunden sind,

b) eine Mehrzahl erster logischer Tore (64), die in Sätze unterteilt sind mit einer Anzahl von Toren in jedem Satz gleich der Anzahl von Bits der kodierten Multibitwörter und der Anzahl der Grauwerttaktsignale, wobei jedes erste logische Tor eines Satzes an einem Eingang ein Bit eines kodierten Multibitwortes vom Puffer (62) erhält und einen Grauwerttaktimpuls am anderen Eingang zur Erzeugung eines logischen Signales an seinem Ausgang aufgrund der Eingangssignale nur wenn an seinen beiden Eingängen Signale gleichzeitig auftreten und

c) eine Mehrzahl von zweiten logischen Toren (66), von denen ein jedes zwischen den Ausgängen eines jeden Satzes der ersten logischen Tore (64) und einer jeweils anderen Druckelektrodentreiberschaltungen (52 bzw. 54) zwischengeschaltet ist, zur Erzeugung von Schreibimpulsen für die Druckelektrodentreiberschaltungen.

6. Verfahren zur Steuerung des Grauwertes von auf einem ladungsempfindlichen Aufzeichnungsträgers mittels eines Matrixdruckers zu druckenden Bildelementen, der einen Grundschreibzyklus, mehrere Druckelektroden und Druckelektrodentreiberschaltungen aufweist, mit folgenden Schritten:

a) Unterteilung des Grundschreibzyklus in eine Mehrzahl gleicher Teile, die hinsichtlich der Zeit und der Bewegung des Aufzeichnungsträgers auf den kleinsten zulässigen und erkennbaren Aufzeichnungsfehler abgestimmt sind,

b) Bestimmung der Anzahl von möglichen Grauwerten, die mit dem Drucker druckbar sind,

c) Kodierung der Anzahl der bestimmten Grauwerte in Multibitwörter, wobei je ein Wort pro Elektrode vorgesehen ist,

d) Erzeugung eines Grauwerttaktsignales für jedes Bit der genannten Multibitwörter, wobei diese Taktsignale ein oder mehrere logisch identifizierbare Teile aufweisen, deren Breite gleich ist den Schreibzyklusteilen,

e) logisches Kombinieren eines jeden Bits der Multibitwörter mit einem der Grauwerttaktsignale, um mehrere Schreibimpulse zu bilden, von denen ein jeder eine effektive Einschaltzeit aufweist, die dem Grauwert des zu druckenden Bildelementes entspricht, und

f) Übertragung der Schreibimpulse zu einer Druckelektrodentreiberschaltung.

7. Verfahren nach Anspruch 6, dadurch gekennzeichnet, dass die Grauwerttaktsignale und die Bits der Multibitwörter logisch kombiniert sind, um Schreibimpulse zu bilden mit einem Längenunterschied von nicht mehr als einem Schreibzyklusteil.

**Claims**

1. Device for controlling the grey scale of pixels to be printed on a charge sensitive record carrier by means of matrix printer electrodes, during print cycles divided into a predetermined number of subdivisions equal with respect to time, characterized by

a) storage means (62) for receiving coded multibit words representing the grey scale of the pixels to be written by the corresponding electrodes,

b) first circuit means (28) for generating a predetermined number of grey scale clock signals of equal amplitude, the number of clock signals equalling the number of bits of the multibit words, each clock signal being associated to another bit, and each of the clock signals comprising a differing number of write cycle subdivision pulses, the positive going portions of which correspond in width to the subdivisions of the write cycles, and

c) second circuit means (50) connected to the first circuit means (28) to receive the grey scale clock signals, to the storage means (62) to receive the coded multibit words, and to the print electrode driver circuits (52, 54) for generating a write pulse in response to received coded multibit words and grey scale clock pulses for each electrode driver circuit.

2. Device as claimed in Claim 1, characterized in that the first circuit means (28) for generating the grey scale signals comprise the following:

a) an oscillator circuit (30) for generating a sequence of pulses of constant amplitude,

b) a binary counter (32) connected to the oscillator circuit (30) to receive the said pulse sequence for generating a plurality of pulses with constant amplitude in response to the received oscillator pulse sequences,

c) a decoder (34) the inputs of which are connected to the outputs of the counter (32) for generating a plurality of output signals of the same amplitude which in width and time relationship correspond to the write cycle subdivisions, and

d) a logic circuit (38) the inputs of which are connected to the outputs of the decoder (34) for generating the grey scale signals by logically combining specific output signals of the decoder (34).

3. Device as claimed in Claim 1, characterized in that the write pulses are generated with a difference in length of not more than one write cycle subdivision.

4. Device as claimed in any one of Claims 2 and 3, characterized by additional reset circuit means (36) arranged between the n'th output line of the decoder (34) and an input line of the counter (34) for resetting the counter as soon as the decoder (34) generates its n'th output signal, n equalling the number of predetermined write cycle subdivisions.

5. Device as claimed in Claim 3, the second circuit means (64) for generating the write pulses comprising the following:

a) buffers (62) connected to the storage for receiving the coded multibit words,

b) a plurality of first logic gates (64) subdivided into sets, with a number of gates in each set which equal the number of bits of the coded multibit words and the number of grey scale signals, each first logic gate of a set receiving at an input one bit of a coded multibit word from the buffer (62), and one grey scale clock pulse at the other input for generating a logic signal at its output in response to the input signals only when signals appear at both its inputs simultaneously, and

c) a plurality of second logic gates (66), one each being connected between the outputs of each sets of the first logic gates (64) and one respective other print electrode driver circuit (52 or 54, respectively) for generating write pulses for the print electrode driver circuits.

6. Method for controlling the grey scale of pixels to be printed on a charge sensitive record carrier by means of a matrix printer, comprising a fundamental write cycle, a plurality of print electrodes, and print electrode driver circuits, comprising the following steps:

a) dividing the fundamental write cycle into a plurality of equal subdivisions which with respect to time and the record carrier movement correspond to the smallest permissible and discernable registration error,

b) determining the number of determined grey scales that are printable with the printer,

c) coding the number of determined grey scales into multibit words, with one word being respectively provided for each electrode,

d) generating a grey scale clock signal for each bit of the multibit words given, these clock signals comprising one or a plurality of logically identifiable portions equal in width to the write cycle subdivisions,

e) logically combining each bit of the multibit words with one of the grey scale clock signals for forming a plurality of write pulses each having an effective on-time that corresponds to the grey scale of the pixel to be printed, and

f) forwarding the write pulses to a print electrode driver circuit.

7. Method as claimed in Claim 6, characterized in that the grey scale clock signals and the bits of the multibit words are logically combined to form write pulses with a difference in length of no more than one write cycle subdivision.

**Revendications**

1. Dispositif pour régler la valeur de gris d'éléments d'image à imprimer par des électrodes d'une imprimante matricielle, excitées par des montages d'attaque, sur un support d'enregistrement électrosensible pendant des cycles d'écriture qui sont subdivisés en un nombre prédéterminé de parties de même durée, caractérisé par

a) un ensemble de mémorisation (62) pour recevoir des mots codés à bits multiples qui représentent la valeur de gris des éléments d'image devant être imprimés par les électrodes correspondantes,

b) un premier montage (28) pour engendrer un nombre prédéterminé de signaux de synchronisation de valeurs de gris de même amplitude, le nombre des signaux de synchronisation étant égal au nombre de bits des mots à bits multiples, chaque signal de synchronisation correspondant à un autre bit et chacun des signaux de synchronisation contenant un nombre différent d'impulsions de parties de cycle d'écriture dont les parties positives correspondent, de par leur largeur, aux parties des cycles d'écriture, et

c) un second montage (50) relié au premier montage (28) pour la réception des signaux de synchronisation de valeur de gris, à l'ensemble de mémorisation (62) pour le réception des mots codés à bits multiples et aux montages d'attaque d'électrodes d'impression (52, 54) pour engendrer une impulsion d'écriture sur la base de mots codés à bits multiples et d'impulsions de synchronisation de valeurs de gris reçus pour chaque montage d'attaque d'électrodes.

2. Dispositif selon la revendation 1, caractérisé en ce que le premier montage (28) pour engendrer les signaux de synchronisation de valeurs de gris comprend:

a) un montage oscillateur (30) pour engendrer un train d'impulsions d'amplitude constante,

b) un compteur binaire (32) relié au montage oscillateur (30) pour la réception desdits trains d'impulsions pour engendrer une pluralité d'impulsions d'amplitude constante sur la base des trains d'impulsions de l'oscillateur reçus,

c) un décodeur (34) dont les entrées sont reliées aux sorties du compteur (32) pour engendrer une pluralité de signaux de sortie de même amplitude qui correspondent, de par leur largeur et leur durée, aux parties du cycle d'écriture, et

d) un circuit logique (38) dont les entrées sont reliées aux sorties de décodeur (34) pour engendrer les signaux de synchronisation de valeurs de gris par combinaison logique de signaux de sortie du décodeur (34) déterminés.

3. Dispositif selon la revendication 1, caractérisé en ce que les impulsions d'écriture sont engendrées avec une différence de longueur ne dépassant pas une partie de cycle d'écriture.

4. Dispositif selon les revendications 2 et 3, caractérisé par des moyens de remise à zéro supplémentaires (36) qui sont intercalés entre la $n^{ième}$ ligne de sortie du décodeur (34) et une ligne d'entrée du compteur (32), pour remettre le compteur à zéro dès que le décodeur (34) engendre son $n^{ième}$ signal de sortie, n'étant égal au nombre de parties du cycle d'écriture prédéterminées.

5. Dispositif selon la revendication 3, dans lequel le second montage (64) pour engendrer les impulsions d'écriture comprend:

a) des mémoires-tampons (62) qui sont reliées à la mémoire pour la réception des mots codés à bits multiples,

b) une pluralité de premières portes logiques (64) qui sont subdivisées en séries avec un nombre de portes par série égal au nombre de bits des mots codés à bits multiples et au nombre des signaux de synchronisation de valeurs de gris, chaque première porte logique d'une série recevant à une entrée un bit d'un mot codé à bits multiples de la mémoire (62) et une impulsion de synchronisation de valeurs de gris à l'autre entrée pour n'engendrer un signal logique à sa sortie sur la base des signaux d'entrée, que s'il apparaît des signaux en même temps à ses deux entrées, et

c) une pluralité de secondes portes logiques (66) dont chacune est intercalée entre les sorties de chaque série des premières portes logiques (54) et chaque fois un montage d'attaque d'électrodes différent (52, 54), pour engendrer des impulsions d'écriture pour les montages d'attaque d'éléctrodes d'impression.

6. Procédé pour régler la valeur de gris d'éléments d'image à imprimer sur un support d'enregistrement électrosensible au moyen d'une imprimante matricielle, qui comporte un cycle d'écriture de base, plusieurs électrodes d'impression et des montages d'attaque des électrodes d'impression, comportant les stades suivants:

a) la subdivision du cycle d'écriture de base en une pluralité de parties égales qui sont réglées, en ce qui concerne la durée et le déplacement du support d'enregistrement, sur la plus petite erreur d'enregistrement admissible et décelable,

b) la détermination du nombre de valeurs de gris possibles pouvant être imprimées avec l'imprimante,

c) le codage du nombre des valeurs de gris déterminées en mots à bits multiples, un mot étant prévu par électrode,

d) la génération d'un signal de synchronisation de valeurs de bris pour chaque bit desdits mots à bits multiples, ces signaux de synchronisation comportant une ou plusieurs parties logiquement identifiables dont la largeur est égale à celle des parties du cycle d'écriture,

e) la combinaison logique de chaque bit des mots à bits multiples avec l'un des signaux de synchronisation de valeurs de gris pour former plusieurs impulsions d'écriture dont chacune présente une durée d'activation effective qui correspont à la valeur de gris de l'élément d'image à imprimer, et

f) la transmission des impulsions d'écriture à un montage d'attaque d'électrodes d'impression.

7. Procédé selon la revendication 6, caractérisé en ce que les signaux de valeurs de gris et les bits des mots à bits multiples sont combinés logiquement pour former des impulsions d'écriture avec une différence de longueur ne dépassant pas une partie de cycle d'écriture.

START ————— 20 ————— ENDE

| 1 | 2 | 3 | 4 | 5 | 6 | 7 | 8 | 9 | 10 |

|← 0,05ms

|←————————— 0,50ms —————————→|

SCHREIBZYKLUS

FIG. 1

22a
22b
22

24a
24b
START
24

26a
26b
26

FIG. 2

42

30
OSZ.
44

36
40
LÖSCH-SCHALTG.

32
BINÄR-ZÄHLER
(1) 32a
(2) 32b
(4) 32c
(8) 32d

34
DECO-DIERER
34a
34j
34p

38
LOGISCHE SCHALTG.
38a A
38b B
38c C
38d D

28
46

FIG. 3

11

`TAKTIMPULSE

| | |
|---|---|
| A | 1 ... 10 |
| B | 2 3 ... 10 |
| C | 4 5 6 ... 10 |
| D | 7 8 9 10 |

FIG. 4

| INT. STUFE | 48 | | TAKT-IMPULS-CODE A B C D | EINSCHALT-ZEIT [ms] |
|---|---|---|---|---|
| 1. | | 48a | 0 0 0 0 | 0 |
| 2. | 1 | 48b | 10 | 1 0 0 0 | 0,10 |
| 3. | 2 3 | 48c | 10 | 0 1 0 0 | 0,15 |
| 4. | 1 2 3 | 48d | 10 | 1 1 0 0 | 0,20 |
| 5. | 1 | 48e | 7 8 9 10 | 1 0 0·1 | 0,25 |
| 6. | 2 3 4 5 6 | 48f | 10 | 0 1 1 0 | 0,30 |
| 7. | 2 3 | 48g | 7 8 9 10 | 0 1 0 1 | 0,30 |
| 8. | 1 2 3 | 48h | 7 8 9 10 | 1 1 0 1 | 0,35 |
| 9. | 1 | 48i | 4 5 6 7 8 9 10 | 1 0 1 1 | 0,40 |
| 10. | 48j | 2 3 4 5 6 7 8 9 10 | 0 1 1 1 | 0,45 |
| 11. | 1 2 3 4 5 6 7 8 | 48k | 9 10 | 1 1 1 1 | 0,50 |

FIG. 5

FIG. 6